(19)

**Europäisches Patentamt**

**European Patent Office**

**Office européen des brevets**

(11)  **EP 4 651 437 B1**

(12)  **EUROPEAN PATENT SPECIFICATION**

(45) Date of publication and mention
of the grant of the patent:
**22.07.2026  Bulletin 2026/30**

(21) Application number: **25166021.3**

(22) Date of filing: **25.03.2025**

(51) International Patent Classification (IPC):
**H04L 9/40** *(2022.01)*          **G06F 21/32** *(2013.01)*
**H04L 9/32** *(2006.01)*          **H04L 9/00** *(2022.01)*

(52) Cooperative Patent Classification (CPC):
**H04L 63/0861; G06F 21/32; H04L 9/008;
H04L 9/3231;** H04L 2209/76

(54) **SYSTEM AND METHOD FOR BIOMETRIC PRIVACY IN SINGLE SIGN-ON WITH CONDITIONAL HOMOMORPHIC PROXY RE-ENCRYPTION**

SYSTEM UND VERFAHREN FÜR BIOMETRISCHEN DATENSCHUTZ BEI SINGLE-SIGN-ON MIT BEDINGTER HOMOMORPHER PROXY-NEUVERSCHLÜSSELUNG

SYSTÈME ET PROCÉDÉ DE CONFIDENTIALITÉ BIOMÉTRIQUE EN SIGNATURE UNIQUE AVEC RECHIFFREMENT PAR MANDATAIRE HOMOMORPHE CONDITIONNEL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **14.05.2024  IN 202421037948**

(43) Date of publication of application:
**19.11.2025  Bulletin 2025/47**

(73) Proprietor: **Tata Consultancy Services Limited
Maharashtra (IN)**

(72) Inventors:
- **MADDALI, Lakshmi Padmaja
500081 Hyderabad, Telangana (IN)**
- **NARUMANCHI, Harika
500081 Hyderabad, Telangana (IN)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 3 979 552**

- **SYED HABEEB ET AL: "WiP: Privacy Enabled
Biometric Authentication Based on Proof of
Decryption Techniques", 10 December 2021,
20211210, PAGE(S) 185 - 197, XP047617111**

**Description**

CROSS-REFERENCE TO RELATED APPLICATIONS AND PRIORITY

The present application claims priority from Indian provisional application no. 202421037948, filed on May 14, 2024.

TECHNICAL FIELD

The disclosure herein generally relates to the field of cybersecurity and, more particularly, to a method and system for biometric privacy in single sign-on with conditional homomorphic proxy re-encryption.

BACKGROUND

Biometric authentication is one of the common forms of authentication used in practice. However, in biometric authentication process, when a user enrolls with an identity provider using biometric information, the authentication process exposes the biometric information or its derived template to an authentication server. Given the importance of compliance with privacy regulations such as General Data Protection Regulation (GDPR), exposing biometric information to third-party entities will impact user privacy. Non-compliance with these regulations can have significant financial and credibility implications for organizations. Hence, Single Sign On (SSO) is preferred nowadays over other authentication mechanisms to reduce password related security risks and to avoid phishing attacks. The SSO is an authentication scheme where users can securely authenticate and gain access to multiple applications and websites by only logging in with a single username and password.

In conventional SSO methods, the identity providers typically have full access to the user's biometric information, making them attractive targets for attackers and potentially leading to privacy breaches or unauthorized sharing of biometrics. Users often have limited control on how their biometric information is used, shared or processed. Even if the biometric information is stored in encrypted form using traditional encryption schemes, it still needs to be decrypted for user authentication. Moreover, once biometric information is compromised, it's challenging for users to revoke or change their biometric credentials, unlike passwords or tokens which can be easily reset. Current SSO systems require user's biometric information either in plain or in encrypted format for authentication. However, even if biometric are encrypted, they need to be decrypted at the identity provider side at some point to authenticate a user.

This can lead to privacy concerns for the users as it exposes biometric information to the identity provider. Some conventional password-less authentication solutions only support some device types or use cases. Even though, these (passkeys) mechanisms exist, there is an additional overhead of maintaining multiple copies of master key that is needed for resetting the passkeys. Some solutions are not only inconvenient but also insecure. If the private key is lost, the user will not be able to authenticate himself without resetting password via forgot password workflow. Resetting password is performed using a duplicate copy of his private key (which needs user to maintain multiple devices for storing private key). There's also no guarantee that the person initiating the login is in possession of both devices. This raises security concerns, as attacker would be attracted to use the weakest link (resetting password) to gain access to the system. Therefore, there is a need for technology that can perform SSO authentication without revealing the biometric information.

European patent application EP3979552 A1 is background art.

SUMMARY

Embodiments of the present disclosure present technological improvements as solutions to one or more of the above-mentioned technical problems recognized by the inventors in conventional systems. For example, in one embodiment, a method for Biometric privacy in single sign-on with conditional homomorphic proxy re-encryption is provided. The method includes receiving, by one or more hardware processors of a service provider, a service request from a user associated with a client machine. Further, the method includes sending, by the one or more hardware processors of the service provider via an identity provider, an authentication request to the client machine for the service request, wherein the client machine performs (i) capturing a biometric data pertaining to the user using a biometric capturing device associated with the client machine (ii) generating an encrypted biometric data associated with the user based on the captured biometric data using a Conditional Homomorphic Proxy Re-Encryption (CH-PRE) public key of the user and, wherein encrypted biometric data is transmitted to the identity provider. Furthermore, the method includes receiving, by the one or more hardware processors of the service provider, a re-encrypted authentication result from the identity provider, wherein the re-encrypted authentication result is generated based on the received encrypted biometric data by the identity provider by: (i) computing a similarity score by comparing the encrypted biometric data received from the client machine with a plurality of biometric templates associated with a plurality of users captured and stored (ii) obtaining an authentication result by comparing the similarity score with a pre-defined encrypted threshold, wherein the authentication result is one of, (i) a match and (ii) a non-match and (ii) re-encrypting the authentication result using a re-encryption key to obtain a re-encrypted authentication result, wherein the identity provider re-encrypts the encrypted authentication result only if a predicate is true and, wherein the re-encrypted authentication result is transmitted to the service provider. Furthermore, the method includes decrypting, by the one or more hardware processors of the service provider, the re-encrypted authentication result received from the identity provider using the CH-PRE private key of the service provider to obtain an authentication result. Finally, the method includes providing service, by the one or more hardware processors of the service provider to the client machine, by validating the authentication result, wherein the access is allowed if the authentication result is a match, and the access is denied if the authentication result is a non-match.

In another aspect, a system for biometric privacy in single sign-on with conditional homomorphic proxy re-encryption is provided. The system includes a plurality of client machines, an identity provider and a service provider, wherein the service provider, the plurality of client machines and the identity provider comprises at least one memory storing programmed instructions; one or more Input /Output (I/O) interfaces; and one or more hardware processors of the service provider, the plurality of client machines and the identity provider are operatively coupled to a corresponding at least one memory, wherein the system is configured to receive, a service request from a user associated with a client machine. Further, the system is configured to send by the service provider via an identity provider, an authentication request to the client machine for the service request, wherein the client machine performs (i) capturing a biometric data pertaining to the user using a biometric capturing device associated with the client machine (ii) generating an encrypted biometric data associated with the user based on the captured biometric data using a Conditional Homomorphic Proxy Re-Encryption (CH-PRE) public key of the user and, wherein encrypted biometric data is transmitted to the identity provider. Furthermore, the system is configured to receive, by the service provider, a re-encrypted authentication result from the identity provider, wherein the re-encrypted authentication result is generated based on the received encrypted biometric data by the identity provider by: (i) computing a similarity score by comparing the encrypted biometric data received from the client machine with a plurality of biometric templates associated with a plurality of users captured and stored (ii) obtaining an authentication result by comparing the similarity score with a pre-defined encrypted threshold, wherein the authentication result is one of, (i) a match and (ii) a non-match and (ii) re-encrypting the authentication result using a re-encryption key to obtain a re-encrypted authentication result, wherein the identity provider re-encrypts the encrypted authentication result only if a predicate is true and, wherein the re-encrypted authentication result is transmitted to the service provider. Furthermore, the system is configured to decrypt, the re-encrypted authentication result received from the identity provider using the CH-PRE private key of the service provider to obtain an authentication result. Finally, the system is configured to provide service, by the service provider to the client machine, by validating the authentication result, wherein the access is allowed if the authentication result is a match, and the access is denied if the authentication result is a non-match.

In yet another aspect, one or more non-transitory machine-readable information storage mediums comprising one or more instructions which when executed by one or more hardware processors cause to: receive a service request from a user associated with a client machine; send by the service provider via an identity provider, an authentication request to the client machine for the service request, wherein the client machine performs (i) capturing a biometric data pertaining to the user using a biometric capturing device associated with the client machine (ii) generating an encrypted biometric data associated with the user based on the captured biometric data using a Conditional Homomorphic Proxy Re-Encryption (CH-PRE) public key of the user and, wherein encrypted biometric data is transmitted to the identity provider; receive, by the service provider, a re-encrypted authentication result from the identity provider, wherein the re-encrypted authentication result is generated based on the received encrypted biometric data by the identity provider by: (i) computing a similarity score by comparing the encrypted biometric data received from the client machine with a plurality of biometric templates associated with a plurality of users captured and stored (ii) obtaining an authentication result by comparing the similarity score with a pre-defined encrypted threshold, wherein the authentication result is one of, (i) a match and (ii) a non-match and (ii) re-encrypting the authentication result using a re-encryption key to obtain a re-encrypted authentication result, wherein the identity provider re-encrypts the encrypted authentication result only if a predicate is true and, wherein the re-encrypted authentication result is transmitted to the service provider; decrypt, the re-encrypted authentication result received from the identity provider using the CH-PRE private key of the service provider to obtain an authentication result; and provide service, by the service provider to the client machine, by validating the authentication result, wherein the access is allowed if the authentication result is a match, and the access is denied if the authentication result is a non-match.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for biometric privacy in single sign-on with conditional homomorphic proxy re-encryption (CH-PRE), according to some embodiments of the present disclosure.

FIG. 1B is a functional block diagram of a computing device associated with the system of FIG. 1A, according to some embodiments of the present disclosure.

FIGS. 2A and 2B are exemplary flow diagrams for a method for biometric privacy in single sign-on with CH-PRE implemented by the system of FIG. 1A, in accordance with some embodiments of the present disclosure.

FIG. 3A illustrates an activity diagram for biometric registration for the method for biometric single sign-on authentication via CH-PRE implemented by the system of FIG. 1A, according to some embodiments of the present disclosure.

FIG. 3B illustrates an activity diagram illustrating the method for the biometric privacy in single sign-on with CH-PRE, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventional Biometric-Single Sign On (B-SSO) user authentication workflow has two phases: (1) Enrollment Phase (2) Authentication Phase. In enrollment workflow, a biometric device captures the user's biometric data (e.g. fingerprints, iris) and extracts specific features from it. Further, users send enrollment requests (extracted biometric features) to an identity provider. Further, the extracted features are processed to create a unique and secure biometric template. This template is a mathematical representation of certain features extracted from the user's biometric data. These features are chosen to represent key characteristics of the biometric trait. The template associated with the user is then stored in a database or secure location at identity provider. Finally, acknowledgment of biometrics enrollment is sent by the identity provider to the user.

In the authentication workflow, the user attempts to access application or service provided by service provider. Further, identity provider sends requests to the user for authentication. Further, biometric reader on user side captures the current biometric data. Furthermore, the biometrics captured are sent to the identity provider for authenticating the service request. The client machine/ user machine extracts feature from the newly captured biometric data in a similar manner to the enrollment phase. The template created from the extracted features of the current biometric is compared with the template stored during enrollment. This is typically done using matching algorithms that analyze the similarities and differences between the extracted features. The matching algorithm generates a similarity score, or decision based on the comparison. If the similarity score exceeds a predefined threshold or falls within an acceptable range, the authentication is considered successful, and the user is granted access. Otherwise, authentication fails.

In conventional SSO methods, the identity provider has full access to the user's biometric information (can lead to privacy breaches -attractive target for attackers / monetize biometric data). Further, the user has limited control on how his biometric information is used, shared or processed. Even if the biometric information is stored in encrypted form using traditional encryption schemes, biometrics need to be decrypted to authenticate a user. Once biometric information is compromised, it is not possible for users to revoke or change their biometric credentials, unlike passwords or tokens that can be easily reset.

To overcome the challenges of the conventional approaches, embodiments herein provide a method and system for biometric privacy in single sign-on with conditional homomorphic proxy re-encryption. The present disclosure addresses the problem of authenticating a user by a service provider in a single sign on setting without exposing user biometrics to the authentication server or service provider. The present disclosure helps the identity provider or service provider to reduce their liabilities in the context of non-compliance with user privacy regulations. Initially, conditional homomorphic proxy re-encryption (CH-PRE) public and private keys are generated for the user, identity provider and the service provider. When the user initiates an authentication request to access an application or service (ex: Netflix, LinkedIn) provided by the service provider, the service provider redirects to identity provider. If the user is not already authenticated, the service provider redirects the user to the identity provider for authentication. Further, the user encrypts his/her biometrics using CH-PRE, creates ciphertext and generates a re-encryption key. User submits his/her encrypted biometrics and re-encryption key to the identity provider for authentication. The identity provider uses template matching algorithms to compare the user submitted encrypted biometrics (fingerprint, iris) with stored templates. The identity provider then transforms authentication result (cipher text $E(0)/E(1)$) into a new ciphertext (re-encrypted authentication result) using re-encryption key provided by the user and signs the resultant new ciphertext. Further, the identity provider sends the re-encrypted authentication result along with the signature back to the service provider. Further, the service provider decrypts the resultant authentication result and verifies the authenticity by decrypting the homomorphically re-encrypted data using service provider private key, now having access to the authentication result.

Proxy re-encryption (PRE) allows an entity to transform a message encrypted for one party (originating party) to be decrypted by another party (target party) without requiring the secret key of the originating party. Along with the traditional symmetric or asymmetric encryption schemes, PRE offers two additional functionalities for delegation as well as transitivity. Delegation enables a user to generate a re-encryption key based on the originator's secret key and target's public key. The re-encryption key is used to re-encrypt a ciphertext encrypted using originator's public key that can be decrypted using the target's secret key. Moreover, a PRE scheme can be uni-directional or bi-directional based on whether the ciphertext can be re-encrypted from target to the originator.

The present disclosure utilizes a uni-directional PRE that can only re-encrypt ciphertext from originator to target but not in reverse order. Conditional Homomorphic proxy re-encryption (CH-PRE) allows computations to be performed on encrypted data that has been transformed in a specific way while certain conditions are satisfied which can be specified during encryption. The CH-PRE algorithm used in the present disclosure is detailed as follows:

Setup: Setup algorithm takes security parameter $\lambda$ as input and outputs public parameter set pp. We assume $\lambda = 128$ for 128-bit security.

$$pp = setup(\lambda) \dots\dots\dots\dots\dots(1)$$

Key Generation: Key generation algorithm takes public parameter set as input and generates public and private key pair for user *A* say $pk_A, sk_A$.

$$(pk_A, sk_A) = keygen\,(pp, A) \dots\dots\dots(2)$$

Encryption: Encryption function is used to encrypt an originator's message m using public key of the originator $pk_A$ and predicate p. Predicates (conditions) ensure that all other ciphertexts expect the one that is intended to be sent are not decrypted by the target entity.

$$c = encrypt(m, pk_A, p) \dots\dots\dots\dots(3)$$

Re-encryption Key Generation: A re-encryption is key is used by originator as an input to re-encryption function to transform a ciphertext c encrypted under originator's public key $pk_A$ in such a way that it can be decrypted by the target entity under some predicate p. The re-encryption key *rk* is generated by the originator using public and private keys of the originating party say $pk_A, sk_A$, predicate p and public key of the target entity say $pk_B$, who is intended to decrypt the message.

$$rk = rekeygen(sk_A, pk_A, pk_B, p) \dots\dots\dots\dots(4)$$

Re-encryption: Re-encryption transforms a ciphertext encrypted under originator's public key $pk_A$ to another ciphertext with the same underlying message which can be decrypted by a target entity using its secret key $sk_B$ while a predicate is satisfied. The re-encrypted ciphertext is obtained by applying re-encryption key *rk* and predicate p to a ciphertext c encrypted under $pk_A$.-encrypted ciphertext can be decrypted only if the predicate evaluates to true. This prevents unauthorized entities to re-encrypt and decrypt other ciphertexts.

$$c' = reencrypt(c, rk, p) \dots\dots\dots(5)$$

Decryption: Decryption is performed on re-encrypted ciphertext using the target entity's private key, say $sk_B$ satisfying a predicate p.

$$m = decrypt(c', sk_B, p) \dots\dots\dots(6)$$

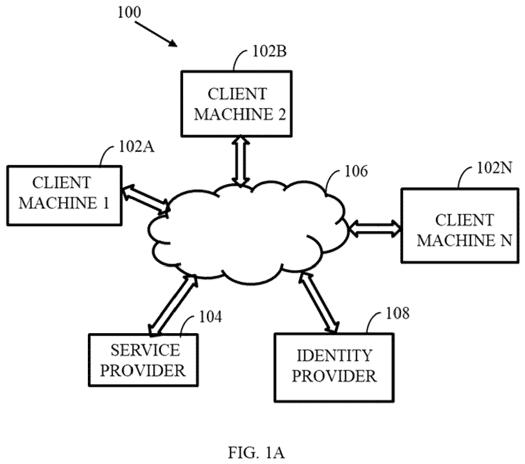

Referring now to the drawings, and more particularly to FIGS. 1A through 3B, where similar reference characters denote corresponding features consistently throughout the figures, there are shown preferred embodiments, and these embodiments are described in the context of the following exemplary system and/or method.

FIG. 1A is a functional block diagram of a system 100 for the biometric privacy in single sign-on with conditional homomorphic proxy re-encryption, according to some embodiments of the present disclosure. The system 100 includes a plurality of client machines 102A, 102B through 102N, a service provider 104, a network 106, and an identity provider 108. The plurality of client machines 102A through 102N, the service provider 104 and the identity provider 108 are connected by the network 106.

In an embodiment, the network 106 can be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 102 through communication links.

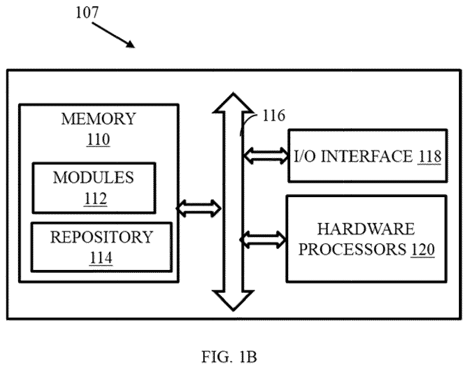

In an embodiment, the plurality of client machines 102A through 102N, the service provider 104, and the identity provider 108 may be implemented in a computing device as shown in FIG. 1B. The plurality of client machine 102A through 102N, the service provider 104, and the identity provider 108 can be a hand-held device, a laptop or other portable computer, a tablet computer, a mobile phone, a PDA, a smartphone, and a desktop computer. The client machine 102 and the proxy server machine 104 may also be implemented in a workstation, a mainframe computer, a server, and a network server.

FIG. 1B is a functional block diagram of computing device 107 associated with the system of FIG. 1A implementing the service provider 104the identity provider 108/ the client machine 102, according to some embodiments of the present disclosure. The computing device 107 is otherwise in communication with hardware processors 120, at least one memory such as a memory 110, an I/O interface 118. The hardware processors 120, memory 110, and the Input /Output (I/O) interface 118 may be coupled by a system bus such as a system bus 116 or a similar mechanism. In an embodiment, the hardware processors 120 can be one or more hardware processors.

The I/O interface 118 may include a variety of software and hardware interfaces, for example, a web interface, a graphical user interface, and the like. The I/O interface 118 may include a variety of software and hardware interfaces, for example, interfaces for peripheral device(s), such as a keyboard, a mouse, an external memory, a printer and the like. Further, the interface 118 may enable the server machine 104 to communicate with other devices, such the client machine 102 via the network 106, web servers and external databases and the like.

The I/O interface 118 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 118 may include one or more ports for connecting a number of computing systems with one another or to another server computer. The I/O interface 118 may include one or more ports for connecting a number of devices to one another or to another server.

The one or more hardware processors 120 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 120 is configured to fetch and execute computer-readable instructions stored in the memory 110.

The memory 110 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 110 includes a plurality of modules 112. The memory 110 also includes a data repository 114 for storing data processed, received, and generated by the plurality of modules 112.

The plurality of modules 112 include programs or coded instructions that supplement applications or functions performed by the server machine 104 for the conditional homomorphic proxy re-encryption scheme. The plurality of modules 112, amongst other things, can include routines, programs, objects, components, and data structures, which performs particular tasks or implement particular abstract data types. The plurality of modules 112 may also be used as, signal processor(s), state machine(s), logic circuitries, and/or any other device or component that manipulates signals based on operational instructions. Further, the plurality of modules 112 can be used by hardware, by computer-readable instructions executed by the one or more hardware processors 120, or by a combination thereof. The plurality of modules 112 can include various sub-modules (not shown). The plurality of modules 112 may include computer-readable instructions that supplement applications or functions performed by the system 100 for the CH-PRE.

The data repository 114 may include a plurality of abstracted piece of code for refinement and data that is processed, received, or generated as a result of the execution of the plurality of modules in the module(s) 112.

Although the data repository 114 is shown internal to the system 100, it will be noted that, in alternate embodiments, the data repository 114 can also be implemented external to the system 100, where the data repository 114 may be stored within a database (not shown in FIG. 1) communicatively coupled to the system 100. The data contained within such external database may be periodically updated. For example, new data may be added into the database (not shown in FIG. 1) and/or existing data may be modified and/or non-useful data may be deleted from the database (not shown in FIG. 1). In one example, the data may be stored in an external system, such as a Lightweight Directory Access Protocol (LDAP) directory and a Relational Database Management System (RDBMS).

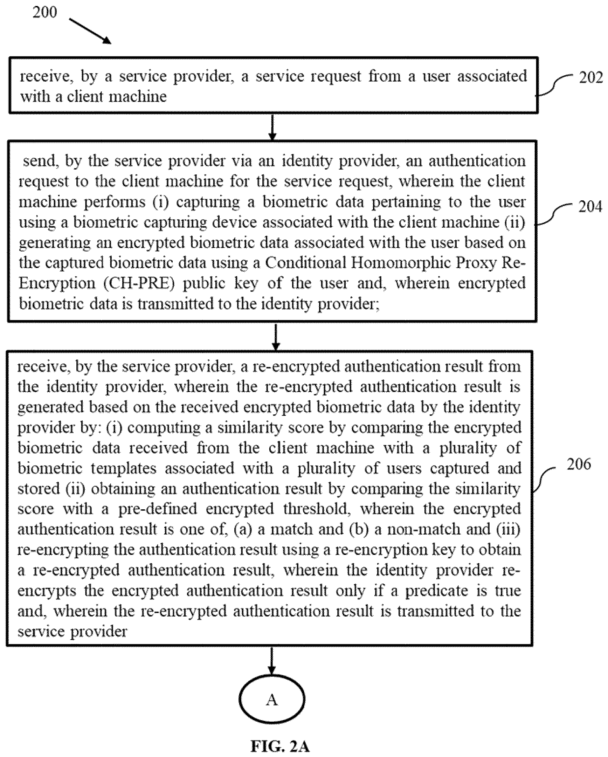

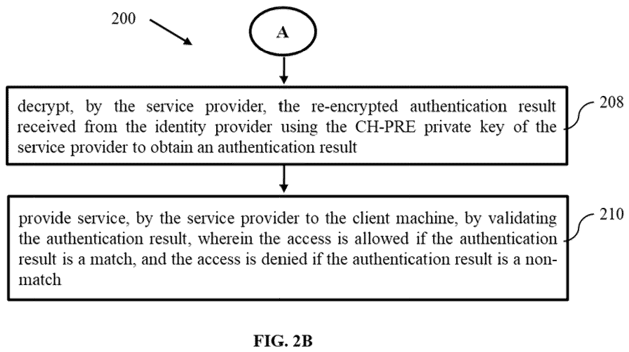

As understood by ordinary person skilled in the art, the client machines 102A through 102N has functional components similar to functional components of the service provider 104 and the identity provide 108 as depicted by computing device 107 in FIG. 2 and not repeated herein for brevity. The components perform functions in accordance with instructions stored in memory block of the client device enabling the client device to communicate with the server 104.

FIGS. 2A and 2B are exemplary flow diagrams for a processor implemented method for the CH-PRE scheme implemented by the system of FIG. 1A and FIG. 1B according to some embodiments of the present disclosure. In an embodiment, the computing device 107, implementing the server 104, comprises one or more data storage devices or the memory 110 operatively coupled to the one or more hardware processor(s) 120 and is configured to store instructions for execution of steps of the method 200 by the one or more hardware processors 120. The steps of the method 200 of the present disclosure will now be explained with reference to the components or blocks of the system 107 as depicted in FIG. 1B and the steps of flow diagram as depicted in FIG. 2A and FIG. 2B. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

At step 202 of method 200, the one or more hardware processors of the service provider 104 receives a service request from a user associated with a client machine 102. For example, the service request includes a LinkedIn, Netflix and the like.

At step 204 of the method 200, the one or more hardware processors of the one or more hardware processors of the service provider 104 sends via the identity provider 108, an authentication request to the client machine 102 for the service request. The client machine 102 performs (i) capturing a biometric data pertaining to the user using a biometric capturing device associated with the client machine 102 and (ii) generating an encrypted biometric data associated with the user based on the captured biometric data using the CH-PRE public key of the user. The encrypted biometric data is transmitted to the identity provider 108. For example, the user i encrypts the biometric data $ip_i$ using CH-PRE public key $pk_i$ to get $E_{pki}(ip_i)$ and transmits $E_{pki}(ip_i)$ to the identity provider 108.

The steps for generating the encrypted biometric data associated with the user based on the captured biometric data using the CH-PRE public key of the user includes the following steps. Initially, a biometric template pertaining to the user comprising a plurality of biometric features is generated based on the captured biometric data. The plurality of biometric features includes a plurality of minutiae points, a plurality of core points, a plurality of delta points and a plurality of ridge shapes. Further, a biometric string pertaining to the user is generated by converting the biometric template associated with the user into a fixed length binary string using spectral minutiae transformation technique. The biometric string is encrypted using the CH-PRE public key of the user to obtain the encrypted biometric data, wherein the encrypted biometric data is transmitted to an identity provider 108 for authentication.

For example, the technique for capturing biometric data is explained below. User captures his/her fingerprint using biometric reader. Fingerprint is captured with simulated data points representing the fingerprint's characteristics. An example fingerprint characteristics is given as [1,0,1,1,.....................1,0,1]. Further, minutiae points and ridge patterns are extracted from the fingerprint characteristics. An example set of minutiae points is given as [47, 31, 1518, 71, 44, 97, 93, 41, 34] and example ridge pattern is given as ['B', 'B', 'C', 'A', 'C', 'A', 'B', 'B', 'B', 'C', 'A', 'C', 'B', 'B', 'A', 'C', 'B', 'A', 'A', 'A', 'B', 'C', 'B', 'C', 'A', 'B', 'A', 'B', 'B', 'B', 'B', 'B', 'C', 'B', 'C', 'C', 'A', 'A', 'C', 'A', 'C', 'C', 'B', 'A', 'A', 'B', 'B', 'A', 'C', 'B', 'B', 'A', 'A', 'C', 'C', 'C', 'A', 'A', 'A', 'C', 'A', 'C', 'C', 'B', 'C', 'A', 'A', 'B', 'C', 'A', 'B', 'A', 'B', 'A', 'C', 'C', 'A', 'B', 'A', 'C', 'B', 'C', 'C', 'A', 'C', 'C', 'B', 'B', 'B', 'B', 'C', 'B', 'A', 'B', 'A', 'A', 'C', 'A', 'B', 'C']. Further, the extracted features (minutiae points and ridge patterns) are encoded into a sequence of 1s and 0s as given in equation (7).

template1=000101000100010100001000100111000010100000000011010001100100 00110001110100001100 10101001010000100000000010110100 ................(7)      (7)

The above encoded template 1 is further encrypted using user's CH-PRE public key $p_k$ as given in equation (8) and transmitted to the service provider 104 by the client machine 102 (user).

$$\mathrm{E}(template1, pk_i) =$$
$$E(0001010001000101000010001001110000101000000000110100011001 0$$
$$00110001110100001100101010010101000010000000010110100, pk_i) \dots (8)$$

At step 206 of the method 200, the one or more hardware processors of the service provider 104 receives a re-encrypted authentication result from the identity provider 108, wherein the re-encrypted authentication result is generated by the identity provider 108 based on the received encrypted biometric data by initially computing a similarity score by comparing the encrypted biometric data received from the client machine 102 with a plurality of biometric templates associated with a plurality of users captured and stored initially in enrolment phase as shown in equation (9). Now referring to equation (9), "template" is the encrypted template captured and created during authentication phase.

$$E(Res, pk_i) = cosine\text{-}similarity(E(template1, pk_i), E(template, pk_i)) = E(1, pk_i) \quad ......(9) \tag{9}$$

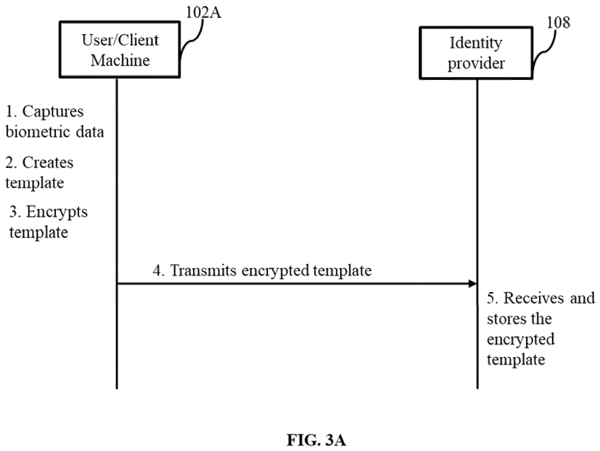

The biometric enrolment phase of the present disclosure is explained in conjunction with FIG. 3A. Initially, the biometric reader on user's side, captures biometric data. A biometric template is created from the captured biometric data for the user say user i, with features such as minutiae points, core and delta points, ridge shapes or patterns and the like. This biometric template is converted to a fixed length binary string $f_i$ using spectral minutiae representation, a mathematical transformation applied to analyze the spatial relationships between the minutiae points. Further, the encoded biometric template is $f_i$ is encrypted using CH-PRE public key of user i to get $E_{pki}(f_i)$. Further, user sends $E_{pki}(f_i)$ to the identity provider 108 and the identity provider 108 stores $E_{pki}(f_i)$ in a database.

Referring back to step 206, further, an authentication result is obtained by comparing the similarity score with a pre-defined encrypted threshold, wherein the encrypted authentication result is one of, (i) a match and (ii) a non-match and the authentication result is re-encrypted using a re-encryption key to obtain a re-encrypted authentication result as shown in equation (10). The identity provider 108 re-encrypts the encrypted authentication result only if a predicate is true and, wherein the re-encrypted authentication result is transmitted to the service provider 104.

The re-encryption key includes a CH-PRE private key of the user, the CH-PRE public key of the user, CH-PRE public key of the service provider 104, a predicate and a user ID associated with the user is created by the client machine 102 by invoking a re-encryption key generation function $rk_i = rekeygensk_i, pk_i, pk_{sp}, p == userid,$ concatenated value obtained by concatenating the user ID and a timestamp. The user sends $E_{pki}(ip_i)$ and $rk_i$ to the identity provider 108.

The identity provider 108 re-encrypts the matching decision $E_{pki}(result)$ by invoking $c' = reencrypt(E_{pki}(result), rk_i, p$ (10). Now referring to equation (10), $spk$ is the CH-PRE public key of the service provider 104.

$$E(Res - reenc, spk) = Reencrypt(E(1, pk_i), rk_i) \quad ................(10)$$

At step 208 of the method 200, the one or more hardware processors of the service provider 104 decrypts the re-encrypted authentication result received from the identity provider 108 using the CH-PRE private key of the service provider 104 to obtain an authentication result as given in equation (11) by invoking $res = decrypt(c', sk_{sp}, p.$

$$Dec(E(Res - reenc, spk), ssk) = 1 \quad ..............(11)$$

At step 210 of the method 200, the one or more hardware processors of the service provider 104 provides service to the client machine, by validating the authentication result, wherein the access is allowed if the authentication result is a match, and the access is denied if the authentication result is a non-match. For example, considering the equation (11), wherein $ssk$ is the service provider's 104 CH-PRE secret key. Since, decrypted result is 1, the user is granted access to the requested service. If decrypted, result is 0, the user is denied access to the requested service.

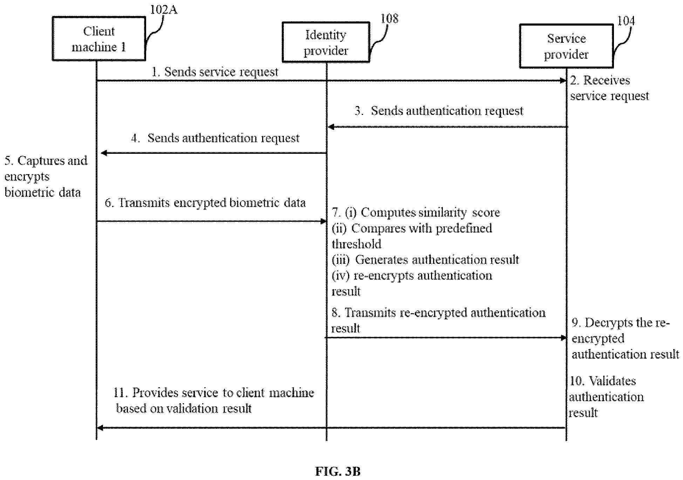

FIG. 3B illustrates an activity diagram illustrating the method for the biometric privacy in single sign-on with CH-PRE, in accordance with some embodiments of the present disclosure. Now referring to FIG. 3B, When the user initiates an authentication request to access an application or service provided by the service provider 104, the service provider 104 redirects to identity provider 108. If the user is not already authenticated, the service provider 104 redirects the user to the identity provider 108 for authentication. Further, user captures and encrypts his/her biometrics using CH-PRE, creates ciphertext and generates a re-encryption key. User submits his/her encrypted biometrics and re-encryption key to the identity provider 108 for authentication. The identity provider 108 uses template matching algorithms to compare the user submitted encrypted biometrics (fingerprint, iris) with stored templates. The identity provider 108 then transmits authentication result into a new ciphertext (re-encrypted authentication result) using re-encryption key provided by the user and signs the resultant ciphertext. Further, the identity provider 108 sends the re-encrypted authentication result along with the signature back to the service provider 104. Further, the service provider 104 decrypts the resultant authentication result and verifies the authenticity by decrypting the homomorphically re-encrypted data using service provider 104 private key, now having access to the authentication result.

Some of the compelling use cases of the present disclosure are as follows: (i) Biometric wearables such as smartwatches or fitness bands that can capture biometric data for authentication purposes (ii) IoT devices, such as smart locks or connected vehicles, can utilize biometric authentication to ensure secure access (iii) Healthcare industry can utilize biometric authentication to secure and efficient access to patient records and healthcare systems. Using biometric SSO healthcare providers can enable quick and secure authentication for accessing electronic health records (EHR) systems, medication administration platforms, and other healthcare applications. This ensures that patient biometric information remains confidential and (iv) Government applications: Government utilizes biometric authentication in border control systems, law enforcement applications, and various government portals.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address the unresolved problem of biometric privacy in single sign-on with conditional homomorphic proxy re-encryption. The present disclosure can authenticate a user without revealing his/her biometric information to a third-party identity provider 108. This is done by encrypting the biometric information and leveraging conditional homomorphic proxy re-encryption scheme to authenticate user without decrypting biometric information. Further, the present disclosure eliminates the need for storing any private keys on multiple devices.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

**1.** A processor implemented method (200), the method comprising:

receiving (202), by one or more hardware processors of a service provider, a service request from a user associated with a client machine;

sending (204), by the one or more hardware processors of the service provider via an identity provider, an authentication request to the client machine for the service request, wherein the client machine performs (i) capturing a biometric data pertaining to the user using a biometric capturing device associated with the client machine (ii) generating an encrypted biometric data associated with the user based on the captured biometric data using a Conditional Homomorphic Proxy Re-Encryption (CH-PRE) public key of the user and, wherein encrypted biometric data is transmitted to the identity provider;

receiving (206), by the one or more hardware processors of the service provider, a re-encrypted authentication result from the identity provider, wherein the re-encrypted authentication result is generated based on the received encrypted biometric data by the identity provider by:

computing a similarity score by comparing the encrypted biometric data received from the client machine with a plurality of biometric templates associated with a plurality of users captured and stored;

obtaining an authentication result by comparing the similarity score with a pre-defined encrypted threshold, wherein the authentication result is one of, (i) a match and (ii) a non-match; and

re-encrypting the authentication result using a re-encryption key to obtain a re-encrypted authentication result, wherein the identity provider re-encrypts the encrypted authentication result only if a predicate is true and, wherein the re-encrypted authentication result is transmitted to the service provider;

decrypting (208), by the one or more hardware processors of the service provider, the re-encrypted authentication result received from the identity provider using the CH-PRE private key of the service provider to obtain an authentication result; and

providing service (210), by the one or more hardware processors of the service provider to the client machine, by validating the authentication result, wherein the access is allowed if the authentication result is a match, and the access is denied if the authentication result is a non-match.

2. The method as claimed in claim 1, wherein each of the plurality of biometric templates associated with each of the plurality of users are pre-captured and encrypted using a CH-PRE public key of the corresponding user before storage.

3. The method as claimed in claim 1, wherein generating the encrypted biometric data associated with the user based on the captured biometric data using the CH-PRE public key of the user comprises:

generating a biometric template pertaining to the user comprising a plurality of biometric features based on the captured biometric data, wherein the plurality of biometric features comprises a plurality of minutiae points, a plurality of core points, a plurality of delta points and a plurality of ridge shapes;

generating a biometric string pertaining to the user by converting the biometric template associated with the user into a fixed length binary string using spectral minutiae transformation technique; and

encrypting the biometric string using the CH-PRE public key of the user to obtain the encrypted biometric data, wherein the encrypted biometric data is transmitted to the identity provider for authentication.

4. The method as claimed in claim 1, wherein a re-encryption key comprising a CH-PRE private key of the user, the CH-PRE public key of the user, CH-PRE public key of the service provider, a predicate and a user ID associated with the user is created by the client machine by invoking a re-encryption key generation function represented, wherein the predicate is equal to a concatenated value obtained by concatenating the user ID and a timestamp.

5. A system (100) comprising:
A plurality of client machines (102A through 102N), an identity provider (108) and a service provider (104), wherein the service provider (104), the plurality of client machines (102A through 102N) and the identity provider (108) comprises at least one memory storing programmed instructions; one or more Input /Output (I/O) interfaces; and one or more hardware processors of the service provider (108), the plurality of client machines (102A through 102N) and the identity provider (108) are operatively coupled to a corresponding at least one memory, wherein the system is configured to:

receive a service request from a user associated with a client machine of the plurality of client machines;

send, by the service provider via an identity provider, an authentication request to the client machine for the service request, wherein the client machine performs (i) capturing a biometric data pertaining to the user using a biometric capturing device associated with the client machine (ii) generating an encrypted biometric data associated with the user based on the captured biometric data using a Conditional Homomorphic Proxy Re-Encryption (CH-PRE) public key of the user and, wherein encrypted biometric data is transmitted to the identity provider;

receive, by the service provider, a re-encrypted authentication result from the identity provider, wherein the re-encrypted authentication result is generated based on the received encrypted biometric data by the identity provider by:

computing a similarity score by comparing the encrypted biometric data received from the client machine with a plurality of biometric templates associated with a plurality of users captured and stored;

obtaining an authentication result by comparing the similarity score with a pre-defined encrypted threshold, wherein the authentication result is one of, (i) a match and (ii) a non-match; and

re-encrypting the authentication result using a re-encryption key to obtain a re-encrypted authentication result, wherein the identity provider re-encrypts the encrypted authentication result only if a predicate is true and, wherein the re-encrypted authentication result is transmitted to the service provider;

decrypt, by the service provider, the re-encrypted authentication result received from the identity provider using the CH-PRE private key of the service provider to obtain an authentication result; and

providing service, by the service provider to the client machine, by validating the authentication result, wherein the access is allowed if the authentication result is a match, and the access is denied if the authentication result is a non-match.

6. The system as claimed in claim 5, wherein each of the plurality of biometric templates associated with each of the plurality of users are pre-captured and encrypted using a CH-PRE public key of the corresponding user before storage.

7. The system as claimed in claim 5, wherein generating the encrypted biometric data associated with the user based on the captured biometric data using the CH-PRE public key of the user comprises:

generating a biometric template pertaining to the user comprising a plurality of biometric features based on the captured biometric data, wherein the plurality of biometric features comprises a plurality of minutiae points, a plurality of core points, a plurality of delta points and a plurality of ridge shapes;

generating a biometric string pertaining to the user by converting the biometric template associated with the user into a fixed length binary string using spectral minutiae transformation technique; and

encrypting the biometric string using the CH-PRE public key of the user to obtain the encrypted biometric data, wherein the encrypted biometric data is transmitted to the identity provider for authentication.

8. The system as claimed in claim 5, wherein a re-encryption key comprising a CH-PRE private key of the user, the CH-PRE public key of the user, CH-PRE public key of the service provider, a predicate and a user ID associated with the user is created by the client machine by invoking a re-encryption key generation function represented, wherein the predicate is equal to a concatenated value obtained by concatenating the user ID and a timestamp.

9. One or more non-transitory machine-readable information storage mediums comprising one or more instructions which when executed by one or more hardware processors cause:

receiving a service request from a user associated with a client machine; sending an authentication request to the client machine for the service request, wherein the client machine performs (i) capturing a biometric data pertaining to the user using a biometric capturing device associated with the client machine (ii) generating an encrypted biometric data associated with the user based on the captured biometric data using a Conditional Homomorphic Proxy Re-Encryption (CH-PRE) public key of the user and, wherein encrypted biometric data is transmitted to the identity provider;

receiving a re-encrypted authentication result from the identity provider, wherein the re-encrypted authentication result is generated based on the received encrypted biometric data by the identity provider by:

computing a similarity score by comparing the encrypted biometric data received from the client machine with a plurality of biometric templates associated with a plurality of users captured and stored;

obtaining an authentication result by comparing the similarity score with a pre-defined encrypted threshold, wherein the authentication result is one of, (i) a match and (ii) a non-match; and

re-encrypting the authentication result using a re-encryption key to obtain a re-encrypted authentication result, wherein the identity provider re-encrypts the encrypted authentication result only if a predicate is true and, wherein the re-encrypted authentication result is transmitted to the service provider;

decrypting the re-encrypted authentication result received from the identity provider using the CH-PRE private key of the service provider to obtain an authentication result; and

providing service by validating the authentication result, wherein the access is allowed if the authentication result is a match, and the access is denied if the authentication result is a non-match.

10. The one or more non-transitory machine readable information storage mediums in claim 9, wherein each of the plurality of biometric templates associated with each of the plurality of users are pre-captured and encrypted using a CH-PRE public key of the corresponding user before storage.

11. The one or more non-transitory machine readable information storage mediums in claim 9, wherein generating the encrypted biometric data associated with the user based on the captured biometric data using the CH-PRE public key of the user comprises:

generating a biometric template pertaining to the user comprising a plurality of biometric features based on the captured biometric data, wherein the plurality of biometric features comprises a plurality of minutiae points, a plurality of core points, a plurality of delta points and a plurality of ridge shapes;

generating a biometric string pertaining to the user by converting the biometric template associated with the user into a fixed length binary string using spectral minutiae transformation technique; and

encrypting the biometric string using the CH-PRE public key of the user to obtain the encrypted biometric data, wherein the encrypted biometric data is transmitted to the identity provider for authentication.

12. The one or more non-transitory machine readable information storage mediums in claim 9, wherein a re-encryption key comprising a CH-PRE private key of the user, the CH-PRE public key of the user, CH-PRE public key of the service provider, a predicate and a user ID associated with the user is created by the client machine by invoking a re-encryption key generation function represented, wherein the predicate is equal to a concatenated value obtained by concatenating the user ID and a timestamp.

**Patentansprüche**

1. Prozessorimplementiertes Verfahren (200), wobei das Verfahren Folgendes umfasst:

Empfangen (202), durch einen oder mehrere Hardwareprozessoren eines Dienstanbieters, einer Dienstanforderung von einem Benutzer, der einer Client-Maschine zugeordnet ist;

Senden (204), durch den einen oder die mehreren Hardwareprozessoren des Dienstanbieters über einen Identitätsanbieter, einer Authentifizierungsanforderung an die Client-Maschine für die Dienstanforderung, wobei die Client-Maschine Folgendes durchführt: (i) Erfassen von biometrischen Daten, die den Benutzer betreffen, unter Verwendung einer biometrischen Erfassungsvorrichtung, die der Client-Maschine zugeordnet ist, (ii) Erzeugen von verschlüsselten biometrischen Daten, die dem Benutzer zugeordnet sind, basierend auf den erfassten biometrischen Daten unter Verwendung eines öffentlichen Schlüssels der bedingten homomorphen Proxy-Neuverschlüsselung (CH-PRE) des Benutzers, und wobei verschlüsselte biometrische Daten an den Identitätsanbieter übertragen werden;

Empfangen (206), durch den einen oder die mehreren Hardwareprozessoren des Dienstanbieters, eines neuverschlüsselten Authentifizierungsergebnisses von dem Identitätsanbieter, wobei das neuverschlüsselte Authentifizierungsergebnis basierend auf den empfangenen verschlüsselten biometrischen Daten durch den Identitätsanbieter durch Folgendes erzeugt wird:

Berechnen einer Ähnlichkeitsbewertung durch Vergleichen der verschlüsselten biometrischen Daten, die von der Client-Maschine empfangen werden, mit einer Mehrzahl von biometrischen Vorlagen, die einer Mehrzahl von Benutzern zugeordnet sind, die erfasst und gespeichert werden;

Erhalten eines Authentifizierungsergebnisses durch Vergleichen der Ähnlichkeitsbewertung mit einem vordefinierten verschlüsselten Schwellenwert, wobei das Authentifizierungsergebnis eines von (i) einer Übereinstimmung und (ii) einer Nichtübereinstimmung ist; und

Neuverschlüsseln des Authentifizierungsergebnisses unter Verwendung eines Neuverschlüsselungsschlüssels, um ein neuverschlüsseltes Authentifizierungsergebnis zu erhalten, wobei der Identitätsanbieter das verschlüsselte Authentifizierungsergebnis nur dann neuverschlüsselt, wenn ein Prädikat wahr ist, und wobei das neuverschlüsselte Authentifizierungsergebnis an den Dienstanbieter übertragen wird;

Entschlüsseln (208), durch den einen oder die mehreren Hardwareprozessoren des Dienstanbieters, des neuverschlüsselten Authentifizierungsergebnisses, das von dem Identitätsanbieter empfangen wird, unter Verwendung des privaten CH-PRE-Schlüssels des Dienstanbieters, um ein Authentifizierungsergebnis zu erhalten; und

Bereitstellen eines Dienstes (210), durch den einen oder die mehreren Hardwareprozessoren des Dienstanbieters an die Client-Maschine, durch Validieren des Authentifizierungsergebnisses, wobei der Zugriff erlaubt wird, wenn das Authentifizierungsergebnis eine Übereinstimmung ist, und der Zugriff verweigert wird, wenn das Authentifizierungsergebnis eine Nichtübereinstimmung ist.

2. Verfahren nach Anspruch 1, wobei jede der Mehrzahl von biometrischen Vorlagen, die jedem der Mehrzahl von Benutzern zugeordnet sind, vorab erfasst und unter Verwendung eines öffentlichen CH-PRE-Schlüssels des entsprechenden Benutzers vor der Speicherung verschlüsselt wird.

3. Verfahren nach Anspruch 1, wobei das Erzeugen der verschlüsselten biometrischen Daten, die dem Benutzer zugeordnet sind, basierend auf den erfassten biometrischen Daten unter Verwendung des öffentlichen CH-PRE-Schlüssels des Benutzers Folgendes umfasst:

Erzeugen einer biometrischen Vorlage, die sich auf den Benutzer bezieht, umfassend eine Mehrzahl von biometrischen Merkmalen basierend auf den erfassten biometrischen Daten, wobei die Mehrzahl von biometrischen Merkmalen eine Mehrzahl von Minutienpunkten, eine Mehrzahl von Kernpunkten, eine Mehrzahl von Deltapunkten und eine Mehrzahl von Gratformen umfasst;

Erzeugen einer biometrischen Zeichenfolge, die sich auf den Benutzer bezieht, durch Umwandeln der biometrischen Vorlage, die dem Benutzer zugeordnet ist, in eine binäre Zeichenfolge mit fester Länge unter Verwendung einer spektralen Minutientransformationstechnik; und

Verschlüsseln der biometrischen Zeichenfolge unter Verwendung des öffentlichen CH-PRE-Schlüssels des Benutzers, um die verschlüsselten biometrischen Daten zu erhalten, wobei die verschlüsselten biometrischen Daten zur Authentifizierung an den Identitätsanbieter übertragen werden.

4. Verfahren nach Anspruch 1, wobei ein Neuverschlüsselungsschlüssel, der einen privaten CH-PRE-Schlüssel des Benutzers, den öffentlichen CH-PRE-Schlüssel des Benutzers, den öffentlichen CH-PRE-Schlüssel des Dienstanbieters, ein Prädikat und eine Benutzer-ID, die dem Benutzer zugeordnet ist, umfasst, durch die Client-Maschine durch Aufrufen einer dargestellten Neuverschlüsselungsschlüsselerzeugungsfunktion erzeugt wird, wobei das Prädikat gleich einem verketteten Wert ist, der durch Verketten der Benutzer-ID und Zeitstempels erhalten wird.

5. System (100), umfassend:
eine Mehrzahl von Client-Maschinen (102A bis 102N), einen Identitätsanbieter (108) und einen Dienstanbieter (104), wobei der Dienstanbieter (104), die Mehrzahl von Client-Maschinen (102A bis 102N) und der Identitätsanbieter (108) mindestens einen Speicher, der programmierte Anweisungen speichert; eine oder mehrere Eingabe/Ausgabe(E/A)-Schnittstellen; und einen oder mehrere Hardwareprozessoren des Dienstanbieters (108) umfassen, wobei die Mehrzahl von Client-Maschinen (102A bis 102N) und der Identitätsanbieter (108) operativ mit einem entsprechenden mindestens einen Speicher gekoppelt sind, wobei das System konfiguriert ist zum:

Empfangen einer Dienstanforderung von einem Benutzer, der einer Client-Maschine der Mehrzahl von Client-Maschinen zugeordnet ist;

Senden, durch den Dienstanbieter über einen Identitätsanbieter, einer Authentifizierungsanforderung an die Client-Maschine für die Dienstanforderung, wobei die Client-Maschine Folgendes durchführt: (i) Erfassen von biometrischen Daten, die den Benutzer betreffen, unter Verwendung einer biometrischen Erfassungsvorrichtung, die der Client-Maschine zugeordnet ist, (ii) Erzeugen von verschlüsselten biometrischen Daten, die dem Benutzer zugeordnet sind, basierend auf den erfassten biometrischen Daten unter Verwendung eines öffentlichen Schlüssels der bedingten homomorphen Proxy-Neuverschlüsselung (CH-PRE) des Benutzers, und wobei verschlüsselte biometrische Daten an den Identitätsanbieter übertragen werden;

Empfangen, durch den Dienstanbieter, eines neuverschlüsselten Authentifizierungsergebnisses von dem Identitätsanbieter, wobei das neuverschlüsselte Authentifizierungsergebnis basierend auf den empfangenen verschlüsselten biometrischen Daten durch den Identitätsanbieter durch Folgendes erzeugt wird:

Berechnen einer Ähnlichkeitsbewertung durch Vergleichen der verschlüsselten biometrischen Daten, die von der Client-Maschine empfangen werden, mit einer Mehrzahl von biometrischen Vorlagen, die einer Mehrzahl von Benutzern zugeordnet sind, die erfasst und gespeichert werden;

Erhalten eines Authentifizierungsergebnisses durch Vergleichen der Ähnlichkeitsbewertung mit einem vordefinierten verschlüsselten Schwellenwert, wobei das Authentifizierungsergebnis eines von (i) einer Übereinstimmung und (ii) einer Nichtübereinstimmung ist; und

Neuverschlüsseln des Authentifizierungsergebnisses unter Verwendung eines Neuverschlüsselungsschlüssels, um ein neuverschlüsseltes Authentifizierungsergebnis zu erhalten, wobei der Identitätsanbieter das verschlüsselte Authentifizierungsergebnis nur dann neuverschlüsselt, wenn ein Prädikat wahr ist, und wobei das neuverschlüsselte Authentifizierungsergebnis an den Dienstanbieter übertragen wird;

Entschlüsseln, durch den Dienstanbieter, des neuverschlüsselten Authentifizierungsergebnisses, das von dem Identitätsanbieter empfangen wird, unter Verwendung des privaten CH-PRE-Schlüssels des Dienstanbieters, um ein Authentifizierungsergebnis zu erhalten; und

Bereitstellen eines Dienstes, durch den Dienstanbieter an die Client-Maschine, durch Validieren des Authentifizierungsergebnisses, wobei der Zugriff erlaubt wird, wenn das Authentifizierungsergebnis eine Übereinstimmung ist, und der Zugriff verweigert wird, wenn das Authentifizierungsergebnis eine Nichtübereinstimmung ist.

6. System nach Anspruch 5, wobei jede der Mehrzahl von biometrischen Vorlagen, die jedem der Mehrzahl von Benutzern zugeordnet sind, vorab erfasst und unter Verwendung eines öffentlichen CH-PRE-Schlüssels des entsprechenden Benutzers vor der Speicherung verschlüsselt wird.

7. System nach Anspruch 5, wobei das Erzeugen der verschlüsselten biometrischen Daten, die dem Benutzer zugeordnet sind, basierend auf den erfassten biometrischen Daten unter Verwendung des öffentlichen CH-PRE-Schlüssels des Benutzers Folgendes umfasst:

Erzeugen einer biometrischen Vorlage, die sich auf den Benutzer bezieht, umfassend eine Mehrzahl von biometrischen Merkmalen basierend auf den erfassten biometrischen Daten, wobei die Mehrzahl von biometrischen Merkmalen eine Mehrzahl von Minutienpunkten, eine Mehrzahl von Kernpunkten, eine Mehrzahl von Deltapunkten und eine Mehrzahl von Gratformen umfasst;

Erzeugen einer biometrischen Zeichenfolge, die sich auf den Benutzer bezieht, durch Umwandeln der biometrischen Vorlage, die dem Benutzer zugeordnet ist, in eine binäre Zeichenfolge mit fester Länge unter Verwendung einer spektralen Minutientransformationstechnik; und

Verschlüsseln der biometrischen Zeichenfolge unter Verwendung des öffentlichen CH-PRE-Schlüssels des Benutzers, um die verschlüsselten biometrischen Daten zu erhalten, wobei die verschlüsselten biometrischen Daten zur Authentifizierung an den Identitätsanbieter übertragen werden.

8. System nach Anspruch 5, wobei ein Neuverschlüsselungsschlüssel, der einen privaten CH-PRE-Schlüssel des Benutzers, den öffentlichen CH-PRE-Schlüssel des Benutzers, den öffentlichen CH-PRE-Schlüssel des Dienstanbieters, ein Prädikat und eine Benutzer-ID, die dem Benutzer zugeordnet ist, umfasst, durch die Client-Maschine durch Aufrufen einer dargestellten Neuverschlüsselungsschlüsselerzeugungsfunktion erzeugt wird, wobei das Prädikat gleich einem verketteten Wert ist, der durch Verketten der Benutzer-ID und Zeitstempels erhalten wird.

9. Ein oder mehrere nichtflüchtige maschinenlesbare Informationsspeichermedien, umfassend eine oder mehrere Anweisungen, die bei Ausführung durch einen oder mehrere Hardwareprozessoren Folgendes bewirken:

Empfangen einer Dienstanforderung von einem Benutzer, der einer Client-Maschine zugeordnet ist;

Senden einer Authentifizierungsanforderung an die Client-Maschine für die Dienstanforderung, wobei die Client-Maschine Folgendes durchführt: (i) Erfassen von biometrischen Daten, die den Benutzer betreffen, unter Verwendung einer biometrischen Erfassungsvorrichtung, die der Client-Maschine zugeordnet ist, (ii) Erzeugen von verschlüsselten biometrischen Daten, die dem Benutzer zugeordnet sind, basierend auf den erfassten biometrischen Daten unter Verwendung eines öffentlichen Schlüssels der bedingten homomorphen Proxy-Neuverschlüsselung (CH-PRE) des Benutzers, und wobei verschlüsselte biometrische Daten an den Identitätsanbieter übertragen werden;

Empfangen eines neuverschlüsselten Authentifizierungsergebnisses von dem Identitätsanbieter, wobei das neuverschlüsselte Authentifizierungsergebnis basierend auf den empfangenen verschlüsselten biometrischen Daten durch den Identitätsanbieter durch Folgendes erzeugt wird:

Berechnen einer Ähnlichkeitsbewertung durch Vergleichen der verschlüsselten biometrischen Daten, die von der Client-Maschine empfangen werden, mit einer Mehrzahl von biometrischen Vorlagen, die einer Mehrzahl von Benutzern zugeordnet sind, die erfasst und gespeichert werden;

Erhalten eines Authentifizierungsergebnisses durch Vergleichen der Ähnlichkeitsbewertung mit einem vordefinierten verschlüsselten Schwellenwert, wobei das Authentifizierungsergebnis eines von (i) einer Übereinstimmung und (ii) einer Nichtübereinstimmung ist; und
Neuverschlüsseln des Authentifizierungsergebnisses unter Verwendung eines Neuverschlüsselungsschlüssels, um ein neuverschlüsseltes Authentifizierungsergebnis zu erhalten, wobei der Identitätsanbieter das verschlüsselte Authentifizierungsergebnis nur dann neuverschlüsselt, wenn ein Prädikat wahr ist, und wobei das neuverschlüsselte Authentifizierungsergebnis an den Dienstanbieter übertragen wird;

Entschlüsseln des neuverschlüsselten Authentifizierungsergebnisses, das von dem Identitätsanbieter empfangen wird, unter Verwendung des privaten CH-PRE-Schlüssels des Dienstanbieters, um ein Authentifizierungsergebnis zu erhalten; und
Bereitstellen eines Dienstes durch Validieren des Authentifizierungsergebnisses, wobei der Zugriff erlaubt wird, wenn das Authentifizierungsergebnis eine Übereinstimmung ist, und der Zugriff verweigert wird, wenn das Authentifizierungsergebnis eine Nichtübereinstimmung ist.

10. Ein oder mehrere nichtflüchtige maschinenlesbare Informationsspeichermedien nach Anspruch 9, wobei jede der Mehrzahl von biometrischen Vorlagen, die jedem der Mehrzahl von Benutzern zugeordnet sind, vorab erfasst und unter Verwendung eines öffentlichen CH-PRE-Schlüssels des entsprechenden Benutzers vor der Speicherung verschlüsselt wird.

11. Ein oder mehrere nichtflüchtige maschinenlesbare Informationsspeichermedien nach Anspruch 9, wobei das Erzeugen der verschlüsselten biometrischen Daten, die dem Benutzer zugeordnet sind, basierend auf den erfassten biometrischen Daten unter Verwendung des öffentlichen CH-PRE-Schlüssels des Benutzers Folgendes umfasst:

Erzeugen einer biometrischen Vorlage, die sich auf den Benutzer bezieht, umfassend eine Mehrzahl von biometrischen Merkmalen basierend auf den erfassten biometrischen Daten, wobei die Mehrzahl von biometrischen Merkmalen eine Mehrzahl von Minutienpunkten, eine Mehrzahl von Kernpunkten, eine Mehrzahl von Deltapunkten und eine Mehrzahl von Gratformen umfasst;
Erzeugen einer biometrischen Zeichenfolge, die sich auf den Benutzer bezieht, durch Umwandeln der biometrischen Vorlage, die dem Benutzer zugeordnet ist, in eine binäre Zeichenfolge mit fester Länge unter Verwendung einer spektralen Minutientransformationstechnik; und
Verschlüsseln der biometrischen Zeichenfolge unter Verwendung des öffentlichen CH-PRE-Schlüssels des Benutzers, um die verschlüsselten biometrischen Daten zu erhalten, wobei die verschlüsselten biometrischen Daten zur Authentifizierung an den Identitätsanbieter übertragen werden.

12. Ein oder mehrere nichtflüchtige maschinenlesbare Informationsspeichermedien nach Anspruch 9, wobei ein Neuverschlüsselungsschlüssel, der einen privaten CH-PRE-Schlüssel des Benutzers, den öffentlichen CH-PRE-Schlüssel des Benutzers, den öffentlichen CH-PRE-Schlüssel des Dienstanbieters, ein Prädikat und eine Benutzer-ID, die dem Benutzer zugeordnet ist, umfasst, durch die Client-Maschine durch Aufrufen einer dargestellten Neuverschlüsselungsschlüsselerzeugungsfunktion erzeugt wird, wobei das Prädikat gleich einem verketteten Wert ist, der durch Verketten der Benutzer-ID und Zeitstempels erhalten wird.

## Revendications

1. Procédé mis en œuvre par processeur (200), le procédé comprenant :

la réception (202), par un ou plusieurs processeurs matériels d'un fournisseur de services, d'une demande de service provenant d'un utilisateur associé à une machine client
l'envoi (204), par les un ou plusieurs processeurs matériels du fournisseur de services par l'intermédiaire d'un fournisseur d'identité, d'une demande d'authentification à la machine client pour la demande de service, dans lequel la machine client effectue (i) la capture de données biométriques concernant l'utilisateur à l'aide d'un dispositif de capture biométrique associé à la machine client (ii) la génération de données biométriques chiffrées associées à l'utilisateur sur la base des données biométriques capturées à l'aide d'une clé publique de rechiffrement par proxy homomorphe conditionnel (CH-PRE) de l'utilisateur et, dans lequel les données biométriques chiffrées sont transmises au fournisseur d'identité ;

la réception (206), par les un ou plusieurs processeurs matériels du fournisseur de services, d'un résultat d'authentification rechiffré provenant du fournisseur d'identité, dans lequel le résultat d'authentification rechiffré est généré sur la base des données biométriques chiffrées reçues par le fournisseur d'identité par :

le calcul d'un score de similarité en comparant les données biométriques chiffrées reçues de la machine client à une pluralité de modèles biométriques associés à une pluralité d'utilisateurs capturés et stockés ;
l'obtention d'un résultat d'authentification en comparant le score de similarité à un seuil chiffré prédéfini, dans lequel le résultat d'authentification est l'un parmi (i) une correspondance et (ii) une non-correspondance ; et
le rechiffrement du résultat d'authentification à l'aide d'une clé de rechiffrement pour obtenir un résultat d'authentification rechiffré, dans lequel le fournisseur d'identité rechiffre le résultat d'authentification chiffré uniquement si un prédicat est vrai et, dans lequel le résultat d'authentification rechiffré est transmis au fournisseur de services ;

le déchiffrement (208), par les un ou plusieurs processeurs matériels du fournisseur de services, du résultat d'authentification rechiffré reçu du fournisseur d'identité à l'aide de la clé privée CH-PRE du fournisseur de services pour obtenir un résultat d'authentification ; et
la fourniture d'un service (210), par les un ou plusieurs processeurs matériels du fournisseur de services à la machine client, en validant le résultat d'authentification, dans lequel l'accès est autorisé si le résultat d'authentification est une correspondance, et l'accès est refusé si le résultat d'authentification est une non-correspondance.

2. Procédé selon la revendication 1, dans lequel chacun de la pluralité de modèles biométriques associés à chacun de la pluralité d'utilisateurs est pré-capturé et chiffré à l'aide d'une clé publique CH-PRE de l'utilisateur correspondant avant stockage.

3. Procédé selon la revendication 1, dans lequel la génération des données biométriques chiffrées associées à l'utilisateur sur la base des données biométriques capturées à l'aide de la clé publique CH-PRE de l'utilisateur comprend :

la génération d'un modèle biométrique concernant l'utilisateur comprenant une pluralité de caractéristiques biométriques sur la base des données biométriques capturées, dans lequel la pluralité de caractéristiques biométriques comprend une pluralité de points de minutiae, une pluralité de points centraux, une pluralité de points delta et une pluralité de formes de crête ;
la génération d'une chaîne biométrique concernant l'utilisateur en convertissant le modèle biométrique associé à l'utilisateur en une chaîne binaire de longueur fixe à l'aide d'une technique de transformation de minutiae spectrale ; et
le chiffrement de la chaîne biométrique à l'aide de la clé publique CH-PRE de l'utilisateur pour obtenir les données biométriques chiffrées, dans lequel les données biométriques chiffrées sont transmises au fournisseur d'identité pour authentification.

4. Procédé selon la revendication 1, dans lequel une clé de rechiffrement comprenant une clé privée CH-PRE de l'utilisateur, la clé publique CH-PRE de l'utilisateur, la clé publique CH-PRE du fournisseur de services, un prédicat et un ID d'utilisateur associé à l'utilisateur est créée par la machine client en invoquant une fonction de génération de clé de rechiffrement représentée, dans lequel le prédicat est égal à une valeur concaténée obtenue par concaténation de l'ID d'utilisateur et d'une estampille temporelle.

5. Système (100) comprenant :
une pluralité de machines clients (102A à 102N), un fournisseur d'identité (108) et un fournisseur de services (104), dans lequel le fournisseur de services (104), la pluralité de machines clients (102A à 102N) et le fournisseur d'identité (108) comprennent au moins une mémoire stockant des instructions programmées ; une ou plusieurs interfaces d'entrée/sortie (E/S) ; et un ou plusieurs processeurs matériels du fournisseur de services (108), la pluralité de machines clients (102A à 102N) et le fournisseur d'identité (108) sont couplés de manière opérationnelle à au moins une mémoire correspondante, dans lequel le système est configuré pour :

recevoir une demande de service provenant d'un utilisateur associé à une machine client de la pluralité de machines clients ;
envoyer, par le fournisseur de services par l'intermédiaire d'un fournisseur d'identité, une demande d'authentification à la machine client pour la demande de service, dans lequel la machine client effectue (i) la capture de données biométriques concernant l'utilisateur à l'aide d'un dispositif de capture biométrique associé à la machine client (ii) la génération de données biométriques chiffrées associées à l'utilisateur sur la base des données biométriques capturées à l'aide d'une clé publique de rechiffrement par proxy homomorphe conditionnel (CH-PRE) de l'utilisateur et, dans lequel les données biométriques chiffrées sont transmises au fournisseur d'identité ; recevoir, par le fournisseur de services, un résultat d'authentification rechiffré provenant du fournisseur d'identité, dans lequel le résultat d'authentification rechiffré est généré sur la base des données biométriques chiffrées reçues par le fournisseur d'identité par :

le calcul d'un score de similarité en comparant les données biométriques chiffrées reçues de la machine client à une pluralité de modèles biométriques associés à une pluralité d'utilisateurs capturés et stockés ; l'obtention d'un résultat d'authentification en comparant le score de similarité à un seuil chiffré prédéfini, dans lequel le résultat d'authentification est l'un parmi (i) une correspondance et (ii) une non-correspondance ; et le rechiffrement du résultat d'authentification à l'aide d'une clé de rechiffrement pour obtenir un résultat d'authentification rechiffré, dans lequel le fournisseur d'identité rechiffre le résultat d'authentification chiffré uniquement si un prédicat est vrai et, dans lequel le résultat d'authentification rechiffré est transmis au fournisseur de services ;

le déchiffrement, par le fournisseur de services, du résultat d'authentification rechiffré reçu du fournisseur d'identité à l'aide de la clé privée CH-PRE du fournisseur de services pour obtenir un résultat d'authentification ; et la fourniture d'un service, par le fournisseur de services à la machine client, en validant le résultat d'authentification, dans lequel l'accès est autorisé si le résultat d'authentification est une correspondance, et l'accès est refusé si le résultat d'authentification est une non-correspondance.

6. Système selon la revendication 5, dans lequel chacun de la pluralité de modèles biométriques associés à chacun de la pluralité d'utilisateurs est pré-capturé et chiffré à l'aide d'une clé publique CH-PRE de l'utilisateur correspondant avant stockage.

7. Système selon la revendication 5, dans lequel la génération des données biométriques chiffrées associées à l'utilisateur sur la base des données biométriques capturées à l'aide de la clé publique CH-PRE de l'utilisateur comprend :

la génération d'un modèle biométrique concernant l'utilisateur comprenant une pluralité de caractéristiques biométriques sur la base des données biométriques capturées, dans lequel la pluralité de caractéristiques biométriques comprend une pluralité de points de minutiae, une pluralité de points centraux, une pluralité de points delta et une pluralité de formes de crête ; la génération d'une chaîne biométrique concernant l'utilisateur en convertissant le modèle biométrique associé à l'utilisateur en une chaîne binaire de longueur fixe à l'aide d'une technique de transformation de minutiae spectrale ; et le chiffrement de la chaîne biométrique à l'aide de la clé publique CH-PRE de l'utilisateur pour obtenir les données biométriques chiffrées, dans lequel les données biométriques chiffrées sont transmises au fournisseur d'identité pour authentification.

8. Système selon la revendication 5, dans lequel une clé de rechiffrement comprenant une clé privée CH-PRE de l'utilisateur, la clé publique CH-PRE de l'utilisateur, la clé publique CH-PRE du fournisseur de services, un prédicat et un ID d'utilisateur associé à l'utilisateur est créée par la machine client en invoquant une fonction de génération de clé de rechiffrement représentée, dans lequel le prédicat est égal à une valeur concaténée obtenue par concaténation de l'ID d'utilisateur et d'une estampille temporelle.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la réception d'une demande de service provenant d'un utilisateur associé à une machine client ; l'envoi d'une demande d'authentification à la machine client pour la demande de service, dans lequel la machine client effectue (i) la capture de données biométriques concernant l'utilisateur à l'aide d'un dispositif de capture biométrique associé à la machine client (ii) la génération de données biométriques chiffrées associées à l'utilisateur sur la base des données biométriques capturées à l'aide d'une clé publique de rechiffrement par proxy homomorphe conditionnel (CH-PRE) de l'utilisateur et, dans lequel les données biométriques chiffrées sont transmises au fournisseur d'identité ;

la réception d'un résultat d'authentification rechiffré provenant du fournisseur d'identité, dans lequel le résultat d'authentification rechiffré est généré sur la base des données biométriques chiffrées reçues par le fournisseur d'identité par :

le calcul d'un score de similarité en comparant les données biométriques chiffrées reçues de la machine client à une pluralité de modèles biométriques associés à une pluralité d'utilisateurs capturés et stockés ;

l'obtention d'un résultat d'authentification en comparant le score de similarité à un seuil chiffré prédéfini, dans lequel le résultat d'authentification est l'un parmi (i) une correspondance et (ii) une non-correspondance ; et le rechiffrement du résultat d'authentification à l'aide d'une clé de rechiffrement pour obtenir un résultat d'authentification rechiffré, dans lequel le fournisseur d'identité rechiffre le résultat d'authentification chiffré uniquement si un prédicat est vrai et, dans lequel le résultat d'authentification rechiffré est transmis au fournisseur de services ;

le déchiffrement du résultat d'authentification rechiffré reçu du fournisseur d'identité à l'aide de la clé privée CH-PRE du fournisseur de services pour obtenir un résultat d'authentification ; et

la fourniture d'un service en validant le résultat d'authentification, dans lequel l'accès est autorisé si le résultat d'authentification est une correspondance, et l'accès est refusé si le résultat d'authentification est une non-correspondance.

10. Un ou plusieurs supports de stockage d'informations lisibles par machine non transitoires selon la revendication 9, dans lequel chacun de la pluralité de modèles biométriques associés à chacun de la pluralité d'utilisateurs est pré-capturé et chiffré à l'aide d'une clé publique CH-PRE de l'utilisateur correspondant avant stockage.

11. Un ou plusieurs supports de stockage d'informations lisibles par machine non transitoires selon la revendication 9, dans lequel la génération des données biométriques chiffrées associées à l'utilisateur sur la base des données biométriques capturées à l'aide de la clé publique CH-PRE de l'utilisateur comprend :

la génération d'un modèle biométrique concernant l'utilisateur comprenant une pluralité de caractéristiques biométriques sur la base des données biométriques capturées, dans lequel la pluralité de caractéristiques biométriques comprend une pluralité de points de minutiae, une pluralité de points centraux, une pluralité de points delta et une pluralité de formes de crête ;

la génération d'une chaîne biométrique concernant l'utilisateur en convertissant le modèle biométrique associé à l'utilisateur en une chaîne binaire de longueur fixe à l'aide d'une technique de transformation de minutiae spectrale ; et

le chiffrement de la chaîne biométrique à l'aide de la clé publique CH-PRE de l'utilisateur pour obtenir les données biométriques chiffrées, dans lequel les données biométriques chiffrées sont transmises au fournisseur d'identité pour authentification.

12. Un ou plusieurs supports de stockage d'informations lisibles par machine non transitoires selon la revendication 9, dans lequel une clé de rechiffrement comprenant une clé privée CH-PRE de l'utilisateur, la clé publique CH-PRE de l'utilisateur, la clé publique CH-PRE du fournisseur de services, un prédicat et un ID d'utilisateur associé à l'utilisateur est créée par la machine client en invoquant une fonction de génération de clé de rechiffrement représentée, dans lequel le prédicat est égal à une valeur concaténée obtenue par concaténation de l'ID d'utilisateur et d'une estampille temporelle.

FIG. 1A

107

MEMORY
110

MODULES
112

REPOSITORY
114

116

I/O INTERFACE 118

HARDWARE
PROCESSORS 120

FIG. 1B

200

receive, by a service provider, a service request from a user associated with a client machine — 202

send, by the service provider via an identity provider, an authentication request to the client machine for the service request, wherein the client machine performs (i) capturing a biometric data pertaining to the user using a biometric capturing device associated with the client machine (ii) generating an encrypted biometric data associated with the user based on the captured biometric data using a Conditional Homomorphic Proxy Re-Encryption (CH-PRE) public key of the user and, wherein encrypted biometric data is transmitted to the identity provider; — 204

receive, by the service provider, a re-encrypted authentication result from the identity provider, wherein the re-encrypted authentication result is generated based on the received encrypted biometric data by the identity provider by: (i) computing a similarity score by comparing the encrypted biometric data received from the client machine with a plurality of biometric templates associated with a plurality of users captured and stored (ii) obtaining an authentication result by comparing the similarity score with a pre-defined encrypted threshold, wherein the encrypted authentication result is one of, (a) a match and (b) a non-match and (iii) re-encrypting the authentication result using a re-encryption key to obtain a re-encrypted authentication result, wherein the identity provider re-encrypts the encrypted authentication result only if a predicate is true and, wherein the re-encrypted authentication result is transmitted to the service provider — 206

A

FIG. 2A

A

decrypt, by the service provider, the re-encrypted authentication result received from the identity provider using the CH-PRE private key of the service provider to obtain an authentication result — 208

provide service, by the service provider to the client machine, by validating the authentication result, wherein the access is allowed if the authentication result is a match, and the access is denied if the authentication result is a non-match — 210

200

**FIG. 2B**

FIG. 3A

102A

Client
machine 1

108

Identity
provider

104

Service
provider

1. Sends service request

2. Receives
service request

3. Sends authentication request

4. Sends authentication request

5. Captures and
encrypts
biometric data

6. Transmits encrypted biometric data

7. (i) Computes similarity score
(ii) Compares with predefined
threshold
(iii) Generates authentication result
(iv) re-encrypts authentication
result

8. Transmits re-encrypted authentication
result

9. Decrypts the re-
encrypted
authentication result

10. Validates
authentication
result

11. Provides service to client machine
based on validation result

FIG. 3B

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421037948

- EP 3979552 A1